# EUROPÄISCHE PATENTSCHRIFT

(11) **EP 1 074 327 B1**
(45) Veröffentlichungstag und Bekanntmachung des Hinweises auf die Patenterteilung: **13.10.2004**
(21) Anmeldenummer: 00114580.4
(22) Anmeldetag: 07.07.2000
(51) Int. Cl.: B23D 49/16

(54) **Stichsäge mit Pendelbewegung des Sägeblattes**
Sabre saw with oscillating drive for the saw blade
Scie sauteuse à mouvement oscillant de la lame de scie

(30) Priorität: 31.07.1999 DE 19936119
(43) Veröffentlichungstag der Anmeldung: 07.02.2001
(73) Patentinhaber: TTS Tooltechnic Systems AG & Co. KG, 73240 Wendlingen (DE)
(72) Erfinder: Tulodziecki, Stefan, 73765 Neuhausen (DE)
(74) Vertreter: Reimold, Otto, Dr. Dipl.-Phys.

(56) Entgegenhaltungen:
- DE-A- 2 235 862
- DE-U- 8 633 351

## Beschreibung

Die Erfindung betrifft eine Stichsäge zum Ausführen von Sägeschnitten in Vorschubrichtung, mit einem auf das zu sägende Werkstück aufzulegenden Sägetisch und einer auf den Sägetisch aufgesetzten Antriebseinheit, die eine zu einer periodisch in Höhenrichtung auf und ab gehenden Hubbewegung antreibbare, mit einem sich bis unterhalb des Sägetisches erstreckenden Sägeblatt verbindbare Hubstange enthält, an der eine in Vorschubrichtung gesehen beiderseits der Hubstange über diese vorstehende Abstützeinrichtung fest angebracht ist, der ein eine Führungseinrichtung für die Abstützeinrichtung bildendes Metallblechteil vorgelagert ist, das mit seinem oberen Endbereich mit dem Gehäuse der Antriebseinheit verbunden ist und unterhalb der Verbindungsstelle beiderseits der Hubstange jeweils eine Gleitfläche für die Abstützeinrichtung bildet und durch eine Federanordnung nach hinten hin belastet ist, wobei die Hubstange mit der Abstützeinrichtung und das Metallblechteil entgegen der Kraft der Federanordnung nach vorne schwenkbar sind, und die Antriebseinheit ferner eine der Sägeblatt-Rückseite zugeordnete, beim Betrieb eine im Takt der Hubbewegung gesteuert hin und her gehende Pendelbewegung ausführende Stützrolle zugeordnet ist, gegen die das Sägeblatt durch die Kraft der Federanordnung anliegt, so daß beim Sägen der Hubbewegung des Sägeblatts eine Vorschubbewegung überlagert ist.

Bei einer bekannten Stichsäge dieser Art (z.B. DE-U-8 633 351) ist das die Führungseinrichtung bildende Metallblechteil oben mittels eines in Querrichtung verlaufenden Achsstiftes am Gehäuse der Antriebseinheit gelagert und die Federanordnung greift im Bereich unterhalb der Abstützeinrichtung an dem Metallblechteil an.

Ausgehend hiervon liegt der vorliegenden Erfindung die Aufgabe zugrunde, eine Stichsäge der genannten Art zu schaffen, die möglichst geräuscharm läuft.

Diese Aufgabe wird erfindungsgemäß dadurch gelöst, daß das Metallblechteil mittels Befestigungsschrauben, die jeweils ein Befestigungsloch des Metallblechteils durchgreifen, mit dem Gehäuse verbunden ist, wobei die Befestigungsschrauben einen radial vorstehenden Schraubenkopf aufweisen und soweit in das Gehäuse eingeschraubt sind, daß das Metallblechteil mit Bewegungsspiel auf den Befestigungsschrauben sitzt, und daß die Federanordnung in Höhenrichtung zwischen den Befestigungsschrauben und der Abstützeinrichtung angeordnet ist, so daß das Metallblechteil unter Bildung eines Spaltes zwischen ihm und dem Gehäuse gegen die Schraubenköpfe gedrückt wird.

Auf diese Weise hält die Federanordnung das Metallblechteil oberhalb von ihr gegen die Schraubenköpfe und unterhalb von ihr gegen die an der Hubstange sitzende Abstützeinrichtung. Führt beim Betrieb die Abstützeinrichtung zusammen mit der Hubstange durch den Angriff der Stützrolle die der Hubbewegung überlagerte Schwenk- oder Pendelbewegung in Vorschubrichtung aus, wird das Metallblechteil entgegen der Kraft der Federanordnung verschwenkt, wobei das Schwenkzentrum bei den Befestigungsschrauben liegt. Bei diesem Verschwenken kann sich das Metallblechteil auf den Befestigungsschrauben etwas verlagern. Dabei wird das Metallblechteil durch die Federanordnung jedoch stets kraftschlüssige gegen die Schraubenköpfe gedrückt. Auf diese Weise werden Klappergeräusche vermieden.

Im Unterschied hierzu neigt das auf einem Achsstift schwenkbar gelagerte Metallblechteil aufgrund des Lagerspiels zum Klappern.

Die erfindungsgemäße Anordnung ermöglicht ferner eine einfache Montage der Stichsäge. Sind nämlich das Metallblechteil und die Hubstange mit der Abstüzteinrichtung in einem vorderen Gehäuseteil der Antriebseinheit angeordnet, das von vorne her an der restlichen Antriebseinheit befestigt ist, sind bei von der restlichen Antriebseinheit entferntem vorderen Gehäuseteil die Befestigungsschrauben des Metallblechteils von der offenen Rückseite des vorderen Gehäuseteils her zugänglich, so daß sie mühelos eingeschraubt werden können. Eine solche Montage ist wesentlich einfacher als die Verwendung eines das Metallblechteil lagernden Achsstiftes.

Ein Ausführungsbeispiel der Erfindung wird nun anhand der Zeichnung erläutert. Es zeigen:
- Figur 1: den die erfindungsgemäße Anordnung enthaltenden Bereich einer Stichsäge im Längsschnitt,
- Figur 2: das die Führungseinrichtung bildende Metallblechteil in Einzeldarstellung in Schrägansicht,
- Figur 3: den die Abstützeinrichtung tragenden Bereich der Hubstange sowie das die Führungseinrichtung bildende Metallblechteil von hinten her in Richtung gemäß Pfeil III in den Figuren 1 und 3 gesehen (die Blickrichtung entspricht der Vorschubrichtung), wobei die sonstigen Teile der Stichsäge weggelassen sind, und
- Figur 4: die Anordnung nach Figur 3 im zur Figur 1 parallelen Längsschnitt gemäß der Schnittlinie IV-IV in Figur 3.

Es handelt sich um eine Stichsäge mit im Prinzip üblichem Aufbau. Da solche Stichsägen und ihre Anwendung allgemein bekannt sind, wird nachstehend nur der in Zusammenhang mit der vorliegenden Erfindung interessierende Bereich der Stichsäge erläutert.

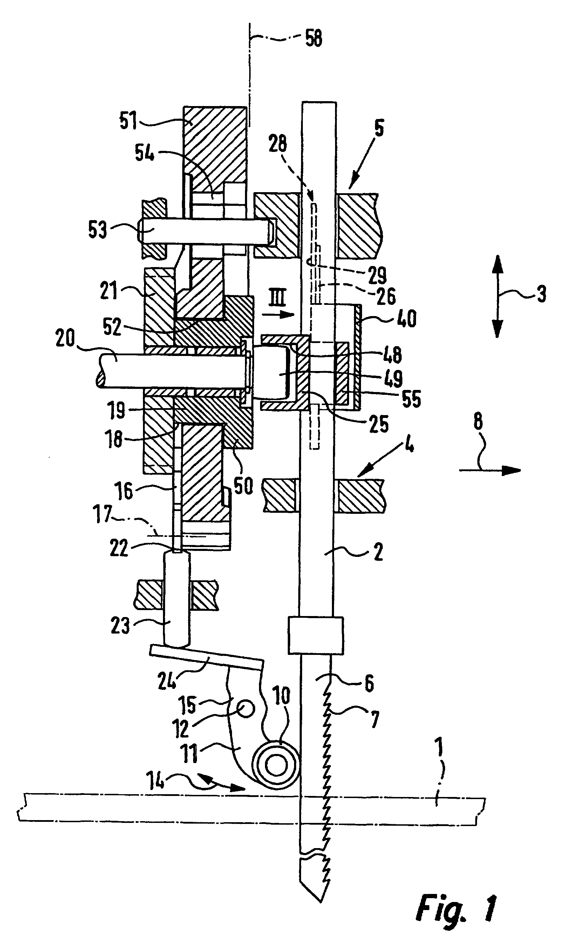

Die Stichsäge dient zum Ausführen von Sägeschnitten in Werkstücken. Dabei weist die Stichsäge einen strichpunktiert angedeuteten Sägetisch 1 auf, mit dem sie auf das jeweilige Werkstück aufgelegt wird. Der Sägetisch 1 trägt eine Antriebseinheit mit einer motorisch betriebenen Antriebseinrichtung, mittels der eine im vorderen Bereich der Stichsäge angeordnete Hubstange 2 zu einer periodisch in Höhenrichtung 3 auf und ab gehenden Hubbewegung antreibbar ist. Die Hubstange 2 ist hierzu, wie üblich, in geeigneter Weise gelagert. In Figur 1 sind zwei solche Lagerstellen 4, 5 angedeutet. An dem unteren Ende der Hubstange 2 kann ein Sägeblatt 6 austauschbar befestigt werden, das durch eine Ausnehmung im Sägetisch 1 nach unten ragt. Das Sägeblatt 6 weist an seiner Vorderseite eine Sägezahnreihe 7 auf. Bewegt man die Stichsäge nach vorne in Vorschubrichtung 8 über das Werkstück, führt das Sägeblatt 6 den Sägeschnitt aus. Dabei wird die Stichsäge am außen entsprechend gestalteten Gehäuse der Antriebseinheit gehalten.

Die Antriebseinheit enthält ferner eine der Sägeblatt-Rückseite 9 zugeordnete Stützrolle 10, die an einem Stützrollenhalter 11 angeordnet ist, der an einer ortsfest an der Antriebseinheit angeordneten Pendelachse 12 pendelnd gelagert ist, die sich quer zum Sägeblatt 6 und zur Vorschubrichtung 8 in Querrichtung erstreckt (in Figur 1 senkrecht zur Zeichenebene).

Der obere Bereich der Hubstange 2 und damit auch das Sägeblatt 6 ist so an der Antriebseinheit gelagert, daß die Hubstange nicht nur die erwähnte Hubbewegung sondern außerdem in der Pendelebene der Stützrolle 10 eine Schwenkbewegung ausführen kann. Dabei ist die Hubstange 2 mittels einer Federanordnung 13 nach hinten hin federbelastet, so daß das Sägeblatt 6 gegen die Stützrolle 8 gehalten wird.

Beim Betrieb führt der Stützrollenhalter 11 und mit diesem die Stützrolle 10 eine im Takt der Hubbewegung des Sägeblattes 6 gesteuert hin und her gehende Pendelbewegung um die Pendelachse 12 in Richtung gemäß Doppelpfeil 14 aus, so daß der Hubbewegung des Sägeblattes 6 eine Vorschubbewegung überlagert wird. Bei der Pendelbewegung wird der die Stützrolle 10 tragende Hebelarm 15 des Stützrollenhalters 11 entgegen der auf die Hubstange 2 angreifenden Federkraft nach vorne gedrückt. Das Zurückschwenken des Stützrollenhalters 11 erfolgt dagegen durch die genannte Federkraft.

Die Bewegung des Stützrollenhalters 11 wird beim Ausführungsbeispiel mittels eines Steuerhebels 16 gesteuert, der um eine ortsfeste, in Vorschubrichtung 8 verlaufende Schwenkachse 17 schwenkbar ist. Der Steuerhebel 27 liegt mit einem seiner Enden an der Umfangsfläche 18 eines Exzenterelements 19 an, das drehbar auf einer Drehachse 20 sitzt und drehfest mit einem beim Betrieb angetriebenen Antriebszahnrad 21 verbunden ist, so daß das Exzenterelement 19 beim Betrieb um die Drehachse 20 umläuft. In Figur 1 nimmt das Exzenterelement 19 eine Mittelstellung ein, in der seine Exzentrizität senkrecht zur Zeichenebene gerichtet ist. Beim umlaufenden Exzenterelement 19 führt der Steuerhebel 16 somit eine hin und her gehende Schwenkbewegung um die Schwenkachse 17 aus. Der Steuerhebel 16 bildet ferner eine die Schwenkbewegung mitmachende Betätigungspartie 22, mit der er an einem Zwischenglied 23 in Gestalt eines Stößels anliegt, das so in der Antriebseinheit gelagert und geführt ist, daß es eine Linearbewegung ausführen kann. Das dem Steuerhebel 16 entgegengesetzte Ende des Zwischengliedes 23 greift am der Stützrolle 10 entgegengesetzten Hebelarm 24 des Stützrollenhalters 11 an.

Da das Sägeblatt 6 durch die Federanordnung 13 nach hinten hin gegen die Stützrolle 10 gehalten wird, wird der Hebelarm 24 des Stützrollenhalters 11 gegen das Zwischenglied 23 und somit dieses gegen die Betätigungspartie 22 des Steuerhebels 16 gedrückt, so daß der Steuerhebel 16 gegen die Umfangsfläche 18 des Exzenterelements 19 gehalten wird. Läuft das Exzenterelement 19 um, folgt der betreffende Steuerhebel-Endbereich der Umfangsfläche 18 des Exzenterelements 19, so daß der Stützrollenhalter 11 seine Pendelbewegung ausführt.

Der Stützrolle 10 könnte in Zusammenhang mit der vorliegenden Erfindung auch ein anderer Pendelantrieb zugeordnet sein.

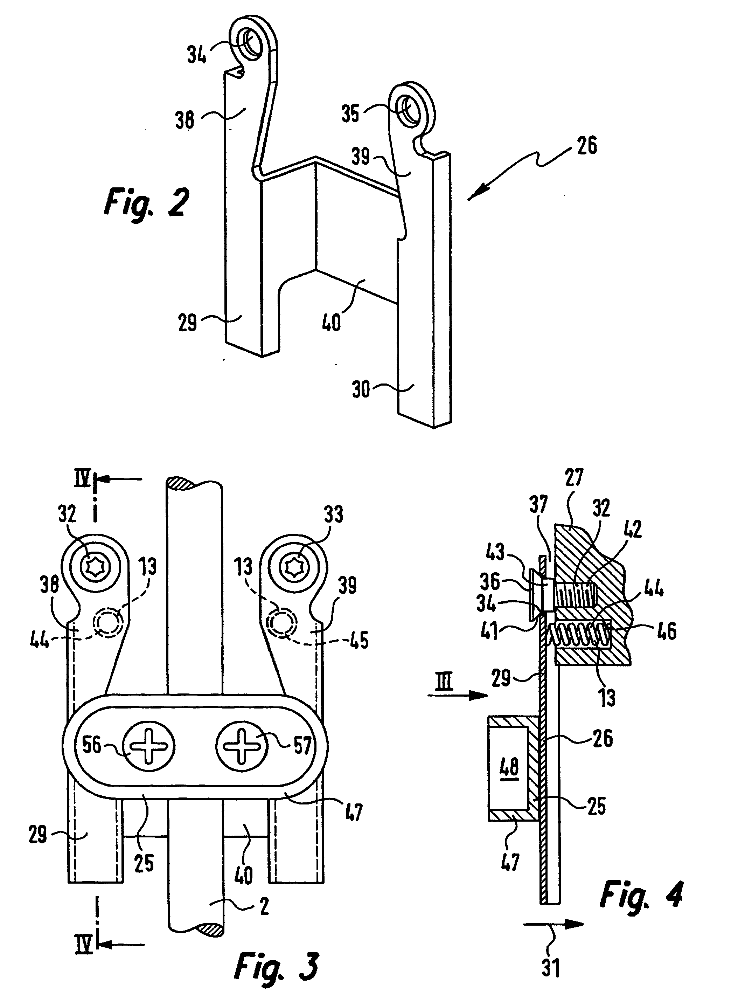

Die Hubstange 2 trägt eine fest an ihr angebrachte Abstützeinrichtung 25, die in Vorschubrichtung 8 gesehen beiderseits der Hubstange 2 über diese vorsteht (siehe Figur 3). Der Abstützeinrichtung 25 ist in Vorschubrichtung 8 ein Metallblechteil 26 vorgelagert, das eine Führungseinrichtung für die Abstützeinrichtung 25 und somit für die Hubstange 2 bei der Hubbewegung bildet. Das Metallblechteil 26 ist mit seinem oberen Endbereich an einer Verbindungsstelle 28 mit dem Gehäuse der Antriebseinheit (in Figur 4 ist die betreffende Gehäusepartie 27 angedeutet) verbunden. Unterhalb der Verbindungsstelle 28 bildet die Abstützeinrichtung 25 beiderseits der Hubstange 2 jeweils eine Gleitfläche 29, 30, die sich in Höhenrichtung 3 mindestens über die Hublänge der Hubstange 2 hinweg erstreckt. Die bereits erwähnte Federanordnung 13 greift an dem Metallblechteil 26 an, und zwar von vorne her, so daß das Metallblechteil 26 mit seinen Gleitflächen 29, 30 gegen die Abstützeinrichtung 25 gehalten wird. Auf diese Weise wirkt die Federkraft auf die Abstützeinrichtung 25 und somit auf die Hubstange 2 und das Sägeblatt 6, das somit gegen die Stützrolle 10 gedrückt wird. Da das Metallblechteil 26 beiderseits der Hubstange 2 an der Abstützeinrichtung 25 angreift, erhält man gleichzeitig eine gegen ein Verdrehen gesicherte Lagerung der Hubstange 2.

Die Hubstange 2 ist, wie bereits erwähnt, in der Pendelebene der Stützrolle 10 schwenkbar angeordnet. Desgleichen ist auch das Metallblechteil 26 schwenkbar, und zwar um seine obere Verbindungsstelle 28, von der aus es sich nach unten erstreckt. Bewegt sich die Stützrolle 10 bei ihrer Pendelbewegung nach vorne, schwenkt die Hubstange 2 nach vorne und nimmt dabei über die Abstützeinrichtung 25 das Metallblechteil 26 mit, das somit entgegen der Kraft der Federanordnung 13 nach vorne in Richtung gemäß Pfeil 31 (siehe Figur 4) ausschwenkt. Das Metallblechteil 26 ist mit Hilfe von Befestigungsschrauben 32, 33 mit der Gehäusepartie 27 der Antriebseinheit verbunden, die jeweils ein Befestigungsloch 34, 35 des Metallblechteils 26 durchgreifen. Beim Ausführungsbeispiel ist das Metallblechteil 26 über zwei solche Befestigungsschrauben 32, 33 mit der Gehäusepartie 27 verbunden, die beiderseits der Hubstange 2 angeordnet sind.

Die Befestigungsschrauben 32, 33 weisen einen radial vorstehenden Schraubenkopf 36 auf und sind so weit in die Gehäusepartie 27 eingeschraubt, daß das Metallblechteil 26 mit Bewegungsspiel auf den Befestigungsschrauben 32, 33 sitzt. Ferner ist die Federanordnung 13 in Höhenrichtung 3 zwischen den Befestigungsschrauben 32, 33 (diese befinden sich in gleicher Höhe) und der Abstützeinrichtung 25 angeordnet, so daß das Metallblechteil 26 oberhalb der Federanordnung 13 gegen die Schraubenköpfe 36 und unterhalb der Federanordnung 13 gegen die Abstützeinrichtung 25 gedrückt wird. Aufgrund des Bewegungsspiels, mit dem das Metallblechteil 26 auf den Befestigungsschrauben 32 sitzt, ergibt sich bei den Befestigungsschrauben 32, 33 zwischen dem Metallblechteil 26 und der Gehäusepartie 27 ein Spalt 37. Bei seiner durch die Drückrolle 10 hervorgerufenen Schwenkbewegung verlagert sich das Metallblechteil 26 etwas auf den Befestigungsschrauben 34, 35, was durch den Spalt 37 ermöglicht wird. Dies und wegen der kraftschlüssigen Lagerung des Metallblechteils 26 mittels der Federanordnung 13 ergibt ein praktisch geräuschfreies Verschwenken des Metallblechteils 26. Der Spalt 37 stellt also sozusagen einen Schwenkspalt dar.

Das mit Metallblechteil 26 kann außerdem so ausgebildet sein, daß es sich bei seinem Verschwenken elastisch etwas verbiegt.

Zweckmäßigerweise weist das Metallblechteil 26 zwei beiderseits der Hubstange 2 oberhalb seiner die Gleitflächen 29, 30 bildenden Partie angeordnete Haltearme 38, 39 auf, deren Endbereiche jeweils mittels einer der Befestigungsschrauben 32, 33 mit der Gehäusepartie 27 verbunden sind. Die beiden Gleitflächen 29, 30 weisen eine leistenartige Längsgestalt auf. Die beiden Haltearme 38, 39 erstrecken sich jeweils in Verlängerung einer der Gleitflächen 29, 30.

Das Metallblechteil 26 bildet zweckmäßigerweise eine fest zusammenhängende Einheit. Beim Ausführungsbeispiel ist das Metallblechteil 26 einstückig ausgebildet. Die beiden Gleitflächen 29, 30 bzw. die diese bildenden Bereiche des Metallblechteils sind über einen vor der Hubstange 2 um diese herum verlaufenden Stegbereich 40 miteinander verbunden.

Somit ergibt sich ein durch Stanzen und Biegen entstandenes Metallblechteil 26.

Der Schraubenkopf 36 weist wie bei einer Senkkopfschraube eine kegelige Unterseite 41 auf. Dies ist für das Verrutschen des Metallblechteils 26 bei seinem Verschwenken günstig. Anstelle der Kegelgestalt könnte die Schraubenkopf-Unterseite auch kugelig sein.

In diesem Zusammenhang ist es vorteilhaft, daß die Befestigungslöcher 34, 35 zumindest an ihrem dem Schraubenkopf 36 zugewandten Ende eine sich erweiternde Gestalt aufweisen. Die Befestigungslöcher 34 können also einen kegeligen oder kugeligen Umfangsrand haben.

Um ein zu weites Einschrauben der Befestigungsschrauben 32, 33 in die Gehäusepartie 27 zu vermeiden, können die Befestigungsschrauben 32, 33 zwischen ihrem Schraubenkopf 36 und ihrem in die Gehäusepartie 27 einzuschraubenden Gewindeschaft 42 eine Halspartie 43 bilden, die einen größeren Durchmesser als der Gewindeschaft 42 aufweist. Die Halspartie 43 stellt somit einen Anschlag beim Einschrauben der Befestigungsschrauben 32, 33 dar, bis zu dem die Befestigungsschrauben in die Gehäusepartie 27 eingeschraubt werden können.

Die Federanordnung 13 wird von mehreren jeweils einer Befestigungsschraube 32, 33 benachbarten Druckfedern 44, 45 gebildet. Beim Ausführungsbeispiel sind also zwei solche Druckfedern 44, 45 vorhanden. Im dargestellten Falle handelt es sich um Schraubenfedern. Diese sind jeweils in einer Gehäuseausnehmung 46 der Antriebseinheit gelagert, aus der sie zum Metallblechteil 26 hin vorstehen.

Die Abstützeinrichtung 25 erfüllt noch eine weitere Funktion. Sie wird von einem Kulissenelement 47 gebildet, das an seiner dem Metallblechteil 26 entgegengesetzten Seite, die nach hinten weist, einen quer zur Höhenrichtung 3 und zur Vorschubrichtung 8 verlaufenden Kulissenschlitz 48 enthält, in den ein Exzenterglied 49 eingreift, das beim Betrieb der Stichsäge eine Umlaufbewegung ausführt und die Hubstange 2 unter Vermittlung des Kulissenelements 47 zu seiner Hubbewegung antreibt. Das Exzenterglied 49 sitzt an einer Exzenterplatte 50, die wie das bereits erwähnte Exzenterelement 19 auf der Drehachse 20 gelagert ist und zusammen mit dem Exzenterelement 19 angetrieben wird. Das Exzenterelement 19 und die Exzenterplatte 50 sind in Richtung der Drehachse 20 hintereinander angeordnet und werden beim Ausführungsbeispiel von einem einstückigen Formteil gebildet. Des Verständnisses der Figur 1 wegen wird darauf hingewiesen, daß sich das Exzenterglied 49 nicht in axialer Verlängerung der Drehachse 20 sondern exzentrisch zu dieser unterhalb der Zeichenebene befindet.

Zum Ausgleich der durch die Hubbewegung der Hubstange 2 mit der Abstützeinrichtung 25 und dem Sägeblatt 6 auftretenden Trägheitskräfte ist ein Massenausgleichskörper 51 vorhanden, der beim Betrieb eine der Hubstange 2 entgegengesetzte Aufund Abbewegung ausführt. Der Massenausgleichskörper 51 sitzt auf der kreisförmigen, zur Drehachse 20 exzentrischen Umfangsfläche 18 des Exzenterelements 19, wobei das Exzenterelement 19 eine in Querrichtung längliche Kulissenausnehmung 52 des Massenausgleichskörpers 51 durchgreift, so daß die Umlaufbewegung des Exzenterelements 19 in die lineare Auf- und Abbewegung des Massenausgleichskörpers 51 umgesetzt wird. Dieser ist innerhalb der Antriebseinheit entsprechend geführt. Zu diesen Führungsmitteln gehört ein aus Figur 1 ersichtlicher, ortsfester Führungsstift 53, der ein Führungs-Langloch 54 im Massenausgleichskörper 51 durchgreift.

Das die Abstützeinrichtung 25 bildende Kulissenelement 47 ist an der Rückseite der Hubstange 2 angeordnet und ist mittels eines die Hubstange 2 vorne umgreifenden Spannglieds 55 an der Hubstange 2 festgeklemmt. Das Kulissenelement 47 ist beiderseits der Hubstange 2 jeweils mittels einer Spannschraube 56, 57 mit dem Spannglied 55 verbunden.

Das Metallblechteil 26 und die Hubstange 2 mit der Abstützeinrichtung 25 sind in einem vorderen Gehäuseteil der Antriebseinheit angeordnet, das von vorne her an der restlichen Antriebseinheit befestigt ist. In Figur 1 ist die Trennebene 58 zwischen dem vorderen Gehäuseteil und der restlichen Antriebseinheit strichpunktiert angedeutet. Bei der Montage, wenn das vordere Gehäuseteil mit der restlichen Antriebseinheit verbunden wird, gelangt das Exzenterglied 49 in Steckeingriff mit dem Kulissenschlitz 48. Desgleichen wird der Führungsstift 43 in eine entsprechende Ausnehmung im vorderen Gehäuseteil eingesteckt. Ist das vordere Gehäuseteil noch nicht an der restlichen Antriebseinheit angebracht, ist die Befestigungsstelle 28 des Metallblechteils 26 von der der Trennebene 58 entsprechenden offenen Rückseite des vorderen Gehäuseteils her zugänglich, so daß sich das Metallblechteil 26 mittels der Befestigungsschrauben 32, 33 ohne Schwierigkeiten montieren läßt.

## Patentansprüche

1. Stichsäge zum Ausführen von Sägeschnitten in Vorschubrichtung, mit einem auf das zu sägende Werkstück aufzulegenden Sägetisch und einer auf den Sägetisch aufgesetzten Antriebseinheit, die eine zu einer periodisch in Höhenrichtung auf und ab gehenden Hubbewegung antreibbare, mit einem sich bis unterhalb des Sägetisches erstreckenden Sägeblatt verbindbare Hubstange enthält, an der eine in Vorschubrichtung gesehen beiderseits der Hubstange über diese vorstehende Abstüzteinrichtung fest angebracht ist, der ein eine Führungseinrichtung für die Abstützeinrichtung bildendes Metallblechteil vorgelagert ist, das mit seinem oberen Endbereich mit dem Gehäuse der Antriebseinheit verbunden ist und unterhalb der Verbindungsstelle beiderseits der Hubstange jeweils eine Gleitfläche für die Abstützeinrichtung bildet und durch eine Federanordnung nach hinten hin belastet ist, wobei die Hubstange mit der Abstützeinrichtung und das Metallblechteil entgegen der Kraft der Federanordnung nach vorne schwenkbar sind, und die Antriebseinrichtung ferner eine der Sägeblatt-Rückseite zugeordnete, beim Betrieb eine im Takt der Hubbewegung gesteuert hin und her gehende Pendelbewegung ausführende Stützrolle zugeordnet ist, gegen die das Sägeblatt durch die Kraft der Federanordnung anliegt, so daß beim Sägen der Hubbewegung des Sägeblattes eine Vorschubbewegung überlagert ist, **dadurch gekennzeichnet, daß** das Metallblechteil (26) mittels Befestigungsschrauben (32, 33), die jeweils ein Befestigungsloch (34, 35) des Metallblechteils (26) durchgreifen, mit dem Gehäuse (27) verbunden ist, wobei die Befestigungsschrauben (32, 33) einen radial vorstehenden Schraubenkopf (36) aufweisen und soweit in das Gehäuse (27) eingeschraubt sind, daß das Metallblechteil (26) mit Bewegungsspiel auf den Befestigungsschrauben (32, 33) sitzt, und daß die Federanordnung (13) in Höhenrichtung zwischen den Befestigungsschrauben (32, 33) und der Abstützeinrichtung (25) angeordnet ist, so daß das Metallblechteil (26) unter Bildung eines Spaltes (37) zwischen ihm und dem Gehäuse gegen die Schraubenköpfe (36) gedrückt wird.

2. Stichsäge nach Anspruch 1, **dadurch gekennzeichnet, daß** das Metallblechteil (26) über zwei beiderseits der Hubstange (2) angeordnete Befestigungsschrauben (32, 33) mit dem Gehäuse verbunden ist.

3. Stichsäge nach Anspruch 2, **dadurch gekennzeichnet, daß** das Metallblechteil (26) zwei beiderseits der Hubstange (2) oberhalb seiner die Gleitflächen (29, 30) bildenden Partie angeordnete, sich in Höhenrichtung erstreckende Haltearme (38, 39) aufweist, deren oberen Endbereiche jeweils mittels einer Befestigungsschraube (32, 33) mit dem Gehäuse verbunden sind.

4. Stichsäge nach einem der Ansprüche 1 bis 3, **dadurch gekennzeichnet, daß** die beiden Gleitflächen (29, 30) leistenartige Längsgestalt aufweisen.

5. Stichsäge nach Anspruch 4, **dadurch gekennzeichnet, daß** sich die beiden Haltearme (38, 39) jeweils in Verlängerung einer Gleitfläche (29, 30) erstrecken.

6. Stichsäge nach einem der Ansprüche 1 bis 5, **dadurch gekennzeichnet, daß** die beiden Gleitflächen (29, 30) des Metallblechteils (26) über einen vor der Hubstange (2) um diese herum verlaufenden Stegbereich (40) des Metallblechteils (26) miteinander verbunden sind.

7. Stichsäge nach einem der Ansprüche 1 bis 6, **dadurch gekennzeichnet, daß** der Schraubenkopf (36) der Befestigungsschrauben (32, 33) eine kegelige oder kugelige Unterseite (41) aufweist.

8. Stichsäge nach Anspruch 7, **dadurch gekennzeichnet, daß** die Befestigungslöcher (34, 35) zumindest an ihrem dem Schraubenkopf (36) zugewandten Ende eine sich erweiternde Gestalt aufweisen.

9. Stichsäge nach einem der Ansprüche 1 bis 8, **dadurch gekennzeichnet, daß** die Befestigungsschrauben (32, 33) zwischen ihrem Schraubenkopf (36) und ihrem in das Gehäuse einzuschraubenden Gewindeschaft (42) eine größeren Durchmesser als der Gewindeschaft aufweisende Halspartie (43) aufweisen, die einen Anschlag beim Einschrauben der Befestigungsschrauben in das Gehäuse bildet.

10. Stichsäge nach einem der Ansprüche 1 bis 9, **dadurch gekennzeichnet, daß** die Federanordnung (13) von mehreren jeweils einer Befestigungsschraube (32, 33) benachbarten Druckfedern (44, 45) gebildet wird.

11. Stichsäge nach einem der Ansprüche 1 bis 10, **dadurch gekennzeichnet, daß** die Abstützeinrichtung (25) von einem Kulissenelement (47) gebildet wird, das an seiner dem Metallblechteil (26) entgegengesetzten Seite einen quer zur Höhenrichtung und zur Vorschubrichtung verlaufenden Kulissenschlitz (48) enthält, in den ein beim Betrieb eine Umlaufbewegung ausführendes, die Hubstange (2) antreibendes Exzenterglied (49) eingreift.

12. Stichsäge nach einem der Ansprüche 1 bis 11, **dadurch gekennzeichnet, daß** das Metallblechteil (26) und die Hubstange (2) mit der Abstützeinrichtung (25) in einem vorderen Gehäuseteil der Antriebseinheit angeordnet sind, das von vorne her an der restlichen Antriebseinheit befestigt ist, wobei die Befestigungsschrauben (32, 33) des Metallblechteils (26) bei von der restlichen Antriebseinheit entferntem vorderen Gehäuseteil von dessen offener Rückseite her zugänglich sind.

## Claims

1. Compass saw for the making of saw cuts in the feed direction, with a saw bench to be placed upon the workpiece to be sawn, and a drive unit mounted on the saw bench, containing a lifting rod which may be driven to perform a periodic up-and-down lifting movement and may be connected to a saw blade extending below the saw bench and to which is securely attached either side of the lifting rod in the feed direction a support fixture which extends beyond the lifting rod and is mounted in front of a sheet-metal part forming a guide element for the support fixture, said sheet-metal part being connected by its upper end section to the housing of the drive unit and forming a sliding surface for the support fixture below the connection point, either side of the lifting rod, and being biased towards the rear by a spring assembly, wherein the lifting rod with the support fixture and the sheet-metal part may be swivelled forwards against the force of the spring assembly, and the drive unit is also assigned a support roller assigned to the rear of the saw blade and executing in operation a to-and-fro oscillating movement in the cycle of the lifting movement and against which the saw blade makes contact due to the force of the spring assembly so that in sawing a feed movement is superimposed on the lifting movement of the saw blade, **characterised in that** the sheet-metal part (26) is connected to the housing (27) by means of mounting screws (32, 33), each passing through a mounting hole (34, 35) of the sheet-metal part (26), wherein the mounting screws (32, 33) have a radially protruding screw head (36) and are screwed into the housing (27) until the sheet-metal part (26) rests on the mounting screws (32, 33) with freedom of movement, and that the spring assembly (13) is located in the vertical direction between the mounting screws (32, 33) and the support fixture (25), so that the sheet-metal part (26) is pressed against the screw heads (36) to form a gap (37) between it and the housing.

2. Compass saw according to claim 1, **characterised in that** the sheet-metal part (26) is connected to the housing by two mounting screws (32, 33) located on either side of the lifting rod (2).

3. Compass saw according to claim 2, **characterised in that** the sheet-metal part (26) has two vertically-extending retaining arms (38, 39) located on either side of the lifting rod (2) above that section of it which forms the sliding surfaces (29, 30), wherein the upper end sections of the retaining arms are each connected to the housing by means of a mounting screw (32, 33).

4. Compass saw according to any of claims 1 to 3, **characterised in that** the two sliding surfaces (29, 30) have a strip-like longitudinal shape.

5. Compass saw according to claim 4, **characterised in that** each of the two retaining arms (38, 39) is an extension of a sliding surface (29, 30).

6. Compass saw according to any of claims 1 to 5, **characterised in that** the two sliding surfaces (29, 30) of the sheet-metal part (26) are joined to one another via a web section (40) of the sheet-metal part (26) which runs round in front of the lifting rod (2).

7. Compass saw according to any of claims 1 to 6, **characterised in that** the screw head (36) of the mounting screws (32, 33) has a conical or spherical underside (41).

8. Compass saw according to claim 7, **characterised in that** the mounting holes (34, 35) have an expanding shape, at least at their ends facing the screw head (36).

9. Compass saw according to any of claims 1 to 8, **characterised in that**, between their screw head (36) and their threaded shank (42) which screws into the housing, the mounting screws (32, 33) have a greater diameter than the neck section (43) with the threaded shank, which forms a stop when the mounting screws are screwed into the housing.

10. Compass saw according to any of claims 1 to 9, **characterised in that** the spring assembly (13) is formed by several compression springs (44, 45), each adjacent to a mounting screw (32, 33).

11. Compass saw according to any of claims 1 to 10, **characterised in that** the support fixture (25) is formed by a link element (47) containing, on that side of it opposite the sheet-metal part (26), a link slot (48) running at right-angles to the vertical direction and the feed direction, and in which an eccentric element (49) making a rotating movement and driving the lifting rod (2) engages in operation.

12. Compass saw according to any of claims 1 to 11, **characterised in that** the sheet-metal part (26) and the lifting rod (2) with the support fixture (25) are located in a front housing section of the drive unit which is attached to the remainder of the drive unit from the front wherein, with the front housing section removed from the rest of the drive unit, the mounting screws (32, 33) of the sheet-metal part (26) are accessible from its open rear side.

## Revendications

1. Scie sauteuse destinée à réaliser des découpages à la scie, dans la direction d'avance, comprenant une table de sciage destinée à être appliquée sur la pièce qu'il convient de scier et une unité d'entraînement, montée sur la table de sciage, qui renferme une tige mobile susceptible d'être entraînée pour décrire périodiquement un mouvement ascensionnel de va-et-vient, en direction verticale, tige qui peut être reliée à une lame de scie s'étendant jusqu'en-dessous de la table de sciage, tige sur laquelle est monté rigidement un dispositif d'appui qui, vu dans la direction d'avance, dépasse de part et d'autre de la tige mobile et qui est monté en amont d'une tôle métallique qui constitue un dispositif de guidage pour le dispositif d'appui, tôle qui est reliée, par sa partie terminale supérieure, au carter de l'unité d'entraînement, et qui constitue, sous le point de liaison, de part et d'autre de la tige mobile, une surface de glissement pour le dispositif d'appui et qui est sollicitée, en direction de l'arrière, par un dispositif à ressorts, la tige mobile, le dispositif d'appui et la tôle métallique étant susceptibles de basculer vers l'avant, à l'encontre de la force du dispositif à ressorts, et le dispositif d'entraînement se voyant associer, en outre, un rouleau d'appui, associé à la face arrière de la lame de scie, qui décrit, en fonctionnement, un mouvement oscillant de va-et-vient, à la cadence du mouvement ascensionnel, rouleau contre lequel repose la lame de scie, du fait de la force exercée par le dispositif à ressorts, de sorte qu'au mouvement ascensionnel de la lame de scie s'ajoute, lors du sciage, un mouvement d'avance, **caractérisée en ce que** la tôle métallique (26) est reliée au carter (27) par des vis de fixation (32, 33), qui traversent chacune un trou de fixation (34, 35) de la tôle métallique (26), les vis de fixation (32, 33) présentant une tête de vis (36) dépassant radialement, et étant vissées dans le carter (27) jusqu'au point où la tôle métallique (26) est positionnée, avec jeu, sur les vis de fixation (32, 33), et **en ce que** le dispositif à ressorts (13) est monté, dans la direction verticale, entre les vis de fixation (32, 33) et le dispositif d'appui (25), de sorte que la tôle métallique (26), en formant une fente (37) entre elle et le carter, est appuyée contre les têtes de vis (36).

2. Scie sauteuse selon la revendication 1, **caractérisée en ce que** la tôle métallique (26) est reliée au carter par deux vis de fixation (32, 33) placées de part et d'autre de la tige mobile (2).

3. Scie sauteuse selon la revendication 2, **caractérisée en ce que** la tôle métallique (26) présente deux bras de maintien (38, 39) s'étendant dans la direction verticale, placés de part et d'autre de la tige mobile (2), au-dessus de sa partie qui constitue les surfaces de glissement (29, 30), bras dont les parties terminales supérieures sont chacune reliées au carter par une vis de fixation (32, 33).

4. Scie sauteuse selon l'une des revendications 1 à 3, **caractérisée en ce que** les deux surfaces de glissement (29, 30) présentent une forme allongée du type baguette.

5. Scie sauteuse selon la revendication 4, **caractérisée en ce que** les deux bras de maintien (38, 39) s'étendent chacun en prolongement d'une surface de glissement (29, 30).

6. Scie sauteuse selon l'une des revendications 1 à 5, **caractérisée en ce que** les deux surfaces de glissement (29, 30) de la tôle métallique (26) sont reliées l'une à l'autre par une zone formant retour (40) de la tôle métallique (26) s'étendant devant la tige mobile (2) et autour de cette dernière.

7. Scie sauteuse selon l'une des revendications 1 à 6, **caractérisée en ce que** la tête de vis (36) des vis de fixation (32, 33) présente une face inférieure conique ou sphérique.

8. Scie sauteuse selon la revendication 7, **caractérisée en ce que** les trous de fixation (34, 35) présentent, au moins à leur extrémité qui est orientée vers la tête de vis (36) une forme allant en s'élargissant.

9. Scie sauteuse selon l'une des revendication 1 à 8, **caractérisée en ce que** les vis de fixation (32, 33) présentent, entre leur tête de vis (36) et leur tige filetée (42) destinée à être vissée dans le carter, un diamètre plus important que la partie formant col (43) qui présente la tige filetée, qui constitue une butée lorsque les vis de fixation sont vissées dans le carter.

10. Scie sauteuse selon l'une des revendications 1 à 9, **caractérisée en ce que** le dispositif à ressorts (13) est constitué de plusieurs ressorts de compression (44, 45) qui sont chacun voisins d'une vis de fixation (32, 33).

11. Scie sauteuse selon l'une des revendications 1 à 10, **caractérisée en ce que** le dispositif d'appui (25) est constitué par un élément coulissant (47) comportant, de son côté opposé à la tôle métallique (26), une fente de coulissement (48) s'étendant perpendiculairement à la direction verticale et à la direction d'avance, dans laquelle pénètre un organe excentrique décrivant, en fonctionnement, un mouvement de rotation et entraînant la tige mobile (2).

12. Scie sauteuse selon l'une des revendications 1 à 11, **caractérisée en ce que** la tôle métallique (26) et la tige mobile (2) sont disposées, avec le dispositif d'appui (25), dans une partie avant du carter de l'unité d'entraînement qui est fixée, par l'avant, au reste de l'unité d'entraînement, les vis de fixation (32, 33) de la tôle métallique (26) étant accessibles, lorsque la partie avant du carter est retirée du reste de l'unité d'entraînement, par sa face arrière ouverte.
